# EUROPEAN PATENT SPECIFICATION

(11) **EP 3 606 724 B1**
(45) Date of publication and mention of the grant of the patent: **07.02.2024**
(21) Application number: 18712933.3
(22) Date of filing: 03.04.2018
(51) Int. Cl.: B29C 51/14, B32B 27/02, B32B 27/12, B32B 37/24, B32B 5/28, B32B 17/04

(54) **METHOD FOR MANUFACTURING RECYCLED PLASTIC COMPOSITE**
VERFAHREN ZUR HERSTELLUNG VON RECYCELTEM KUNSTSTOFFVERBUNDSTOFF
PROCÉDÉ DE FABRICATION D'UN COMPOSITE DE PLASTIQUE RECYCLÉ

(30) Priority: 03.04.2017 EP 17164582
(43) Date of publication of application: 12.02.2020
(73) Proprietor: Dierickx Visschers NV, 9240 Zele (BE)
(72) Inventor: VERHAERT, Koen, 2430 Laakdal (BE); GALLE, Rudy, 9750 Zingem (BE); DIERICKX VISSCHERS, Jules, 9750 Zele (BE)
(74) Representative: Brantsandpatents bv
(86) International application number: PCT/EP2018/058460
(87) International publication number: WO 2018/185085

(56) References cited:
- WO-A1-2015/175761
- WO-A1-2015/175761
- DE-A1- 4 128 927
- DE-A1- 4 128 927
- KR-A- 20160 136 980
- KR-A- 20160 136 980
- US-A- 5 298 319
- US-A- 5 298 319
- US-A1- 2014 124 972
- US-A1- 2014 124 972
- US-A1- 2016 068 668
- US-A1- 2016 068 668

## Description

### Field of Invention

The present invention relates generally to methods for manufacturing a plastic composite. More particularly, the present invention relates to methods for manufacturing a plastic composite using nonwoven recycled thermoplastic material.

### Background of the Invention

Plastic has become the most widely used material throughout the industry to form a variety of products for domestic as well as commercial purposes. Accordingly, there has been a significant increase in plastic production through the years and this has significantly contributed to the increasing solid waste burden. The characteristics of plastics make them an especially troublesome part of rash because they do not decay quickly.

In order to reduce the costs associated with obtaining raw materials, wastage of natural resources for manufacture of disposable products and to minimize potentially negative effects on the environment, efforts have been constantly done for developing methods for recycling used thermoplastic materials, which would otherwise be burnt or placed in a landfill. Methods for manufacturing recycled plastics are described in WO 2015 175761,

In one such application of recycled thermoplastic materials, a variety of thermoplastic composite sheets / boards have been developed. Such thermoplastic composites, generally prepared by nonwoven methods, include fibers materials reinforced within the recycled thermoplastic materials. These thermoplastic composites provide a number of advantages, e.g., they can be molded and formed into a variety of suitable products both structural and non-structural, including such as, among many others, parking plates, advertisement boards, automotive panels, load carriers (crates, boxes, pallets, etc) and many others. US 2014 124 972 and US 2016 068 668 describe the use of various type of reinforcement layers.

However, the use of recycled materials for preparing thermoplastic composites has its own drawbacks. For example, the recycling of various light weight thermoplastic products, e.g., disposable gloves, aprons, air filters, protective covers, plastic covers, polythene, etc., is not generally preferred as their use often result in products that have physical properties which are generally less acceptable than products made from strong thermoplastic materials. Accordingly, these types of products remain "waste", and thus, continue to be sent to landfills or incinerated, and thus, have deleterious effects on the environment.

In some recent efforts, such shortcoming with the light weight thermoplastic material is resolved by using a method in which light weight plastic materials such as polypropylene (PP) or polyethylene bags, films, rags, or the like are first washed in a centrifuge process, shredded, and then melted and reprocessed into a raw pellet form. While this process is generally effective in providing desired properties to the output products - it requires the separate melting processes to form pellets, which inevitably adds cost to the process and thus, to the end recycled product.

As a result there is a need in the art for a time-efficient as well as a cost-efficient method for forming thermoplastic composites prepared from recycled materials, having properties of impact strength, brittleness, swell, heat resistance, heat retardancy, dimensional stability, wear resistance at least comparable to products made with virgin materials.

In addition, in view of a continuously increasing complexity of packaging material, in particular multilayer bags, e.g. crisp bags, and hybrid bags and foils, and consequently increasing difficulties for recycling these materials, it is on objective of the present invention to provide a method enabling efficient recycling thereof.

### Summarv of the Invention

The present invention has been made in the view of the above problems, and discloses a method for manufacturing a plastic composite using non-woven recycled thermoplastic material according to claim 1.

A particular advantage of this method is that it provides a very efficient process enabling the recycling of increasingly complex packaging material, in particular multilayer bags (e.g. crisp bags) and hybrid bags and foils.

Generally, the size of thermoplastic flakes of size ranges between 3mm and 25mm.

In a preferred embodiment, step iv) and v) may be repeated up to 7, or 10 or 20 times before consolidating the structure by heat.

Consolidating the web-structure by thermoforming may be done at a temperature between the first and second temperature, such that the thermoplastic matrix melts at least partially, and preferably substantially completely, and such that the fibers having a second melting temperature do not melt. In some embodiments, the thermoforming processing temperature may be between 190°C and 250°C, or between 190°C and 230°C, or between 190°C and 210°C, or about 200°C. The resulting plastic composite is a rigid composite panel, board, or plank.

Alternatively, consolidating may be done in a two-step thermoforming process. In a first step thermoforming is done at temperature lower than the first melting temperature (e.g. between 90 and 120°C) but higher than the softening temperature of the thermoplastic matrix such that the thermoplastic matrix absorbs sufficient heat energy to soften and stick sufficiently to bond the fibers and thermoplastic matrix partially resulting in a flexible intermediate product, e.g. a flexible mat. Such flexible mat is easily foldable and transportable, and is a valuable intermediate product which can be distributed for subsequent thermoforming in a second step. In the second step thermoforming is done at a temperature between the first and second temperature to further consolidate and forming the final plastic composite. Optionally a number of flexible mats may be put together for being exposed to the second thermoforming step resulting in a rigid composite panel, board, plank with higher thickness.

Possibly, the method further includes forming a plurality of recycled plastic composites and connecting them together one over the other to form a multi-layered recycled plastic composite.

Further possibly, the plurality of plastic composites may be connected together using processes such as but not limited to thermal pressing, vacuum forming, gluing, welding, or the like.

The thermoplastic matrix of flakes generally includes light weight thermoplastic (generally having a lower weight density or lower bulk density than water) such as plastic foils, plastic bags, plastic gloves, foils, or the like. Preferably its melting temperature (in this text further referred to as the first melting temperature) is lower than 200°C, or lower than 190°C.

The fibers with a second melting temperature higher than the first melting temperature may be natural fibers, preferably unravelled natural fibers, and/or thermoplastic fibers and/or glass fibers and/or metal fibers.

The natural fibers may be one of but not limited to natural raw fibers such as jute, hemp, cocos, flax, sisal, or the like.

Possibly, the thermoplastic fibers with the second melting temperature may be one of but not limited to polyesters, ABS (acetyl butyl styrene), PS (Poly styrene), nylon, PA (polyamide), or the like.

The second melting temperature may be at least 10°C higher than the first melting temperature, or at least 20°C higher, or at least 30°C higher, or at least 50°C higher. In some embodiments, the second melting temperature may be at least 210°C, or at least 220°C, or at least 240°, or at least 260°

In a method of the present invention, the fibers with second melting temperature and thermoplastic matrix may be present in a ratio of less than 50:50 by weight, or less than 30:70 by weight, or less than 20:80 by weight, and preferably in a ratio of 10:90 by weight.

Optionally, regrind from plastic materials with higher density and/or higher bulk density than water (e.g. ABS, PS, PVC) are additionally evenly distributed over the web-structure(s) or may be part of the thermoplastic matrix to be distributed. This may result in a plastic composite with lower brittleness. This type of regrind may represent between 5 and 20% weight, or between 10 and 20%weigth, of the total amount of regrind including flakes in the plastic composite.

Further optionally, glass fibers or natural fibers may be additionally evenly distributed over the web-structure(s). This may result in higher stiffness and/or lower thermal expansion.

Further optionally, the method includes treating the plastic composite with a finishing material such as but not limited to antimicrobial coating, wax, paint, varnish, or the like.

The thermoforming process may be one of but not limited to the processes such as thermo-bonding, steam heating, microwave heating, heat pressing, pressure molding, vacuum molding, or the like. The thermoforming processing temperature should lay between the first and the second melting temperature, such that the thermoplastic matrix melts at least partially, and preferably substantially completely, and such that the fibers having second melting temperature do not melt. In some embodiments, the thermoforming processing temperature may be between 190°C and 250°C, or between 190°C and 230°C, or between 190°C and 210°C, or about 200°C.

### Detailed Description of the Preferred Embodiments

The present application discloses a method for forming a plastic composite from recycled thermoplastic materials using a simple, cost- efficient method. The method utilizes light weight plastic materials such as but not limited to plastic films, foils, plastic bags, etc. to form a plastic composite having appropriate mechanical properties, high heat resistance, high impact strength, load resistance, and very good dimensional stability. The plastic composite constructed is useful for forming varieties of panel boards, such as a construction fencing board, advertising boards, plastic road plates, load carriers such as boxes, crates, pallets, or the like. It is to be understood that while the current disclosure has been explained only for light weight recycled thermoplastic materials such as foils, bags, films etc. the current method may be used for generally all kind of thermoplastic materials.

In an embodiment of the present invention, a plastic panel may be constructed from a thermoplastic composite in accordance with one aspect of the present invention. The thermoplastic composite, at least in part, is constructed, from used, to be recycled, thermoplastic material. The thermoplastic material generally is a thermoplastic matrix including one or more light weight (i.e. having a density and/or bulk density lower than water) thermoplastic materials in the form of flakes of size ranging between 3mm and 25mm. The thermoplastic composite further includes a core of fibers, generally entangled and bonded within a three dimensional web structure with the thermoplastic matrix.

In an embodiment of present invention, the thermoplastic panel may be formed of a multilayer thermoplastic composite . The multilayer composite includes a first layer of thermoplastic composite attached and I or adhered to an adjacent second layer of thermoplastic composite. In some examples, the layers may be of similar thickness. In some other embodiments, the layer may be of different thickness. In some examples, the first layer and the second layer are both formed of same thermoplastic materials in same composition. In some other examples, the first layer and the second layer may be formed using different type of thermoplastic materials, thereby providing different properties to each one of them. Accordingly, by inclusion of alternating layers of different materials, the multilayer composite can exhibit the desirable qualities such as high chemical, thermal, and mechanical resistance, high strength, or the like.

The thermoplastic composite may further include one or more layer of finishing materials applied onto a top and / or bottom surface of one or more individual layers of the thermoplastic composite. In an embodiment of the present invention, the finishing material includes one or more antimicrobial coatings of material such as antibacterial agent, antifungal agent, or the like. In another embodiment, the finishing material may include waxing solutions, paint, or the like.

The thermoplastic materials appropriate to be used in this invention, generally constitutes, different types of light weight plastic constituents deriving from the recycled objects such as flexible films and/or sheets obtained beginning from commercial labels, and/or bags, and/or containers, and/or wrappings preferably for food and/or agriculture use, preferably made of at least one material among PE, PET, PVC, PP, PS, all of which are normally unable to be reused and that are ordinarily put into a landfill or incinerated because of cost, melting/bonding, or contamination issues.

Some other non-limiting examples of suitable thermoplastic materials include a products selected from the following group of resins: ABS, acrylic, high density polyethylene (HOPE) , low density polyethylene (LOPE) , Polyethylene terephthalate (PET) , poly vinyl chloride (PVC) , polypropylene (PP) and polystyrene (PS) . Current recycled plastics most commonly available are products made of PET and **HOPE** and include plastic bottles, containers and packaging, plastic lumber, etc., all of which are identified with one of the acceptable recyclable symbols including: "high density white plastic" means containers and packaging made from white or translucent plastics such as white detergent containers, windshield washer containers, etc.

Further examples of thermoplastic materials include the commercial plastic labels applied to containers, boxes, cans, bottles containing foodstuffs, etc.; transparent, semitransparent and opaque bags, containing fresh and/or long-life foodstuffs; bags for agricultural products, such as fertilizers, manure, seeds etc.; transparent, semitransparent and opaque impermeable tarpaulins; bags for garbage, foodstuff, products and goods, etc.; thermoplastic packaging of mono- and multi-product packs, etc. and/or any suitable combination thereof.

The fibers having a second melting temperature higher than the melting point of the thermoplastic matrix for use in manufacture of the plastic composite may include thermoplastic fibers with higher melting point than the melting point of the thermoplastic matrix, and/or glass fibers, and/or metal fibers, and/or a matrix of natural fibers, preferably unraveled, obtained by working entangled natural raw fibers using conventionally available tools such as for example, a bast fibre opening machine, or a tearing machine, or the like.

The term "natural fibers" as used herein, refers to any continuous filament which is derived from natural, renewable sources such as plants or animals. The words "fibers" and "fibers" are used interchangeably. Natural fibers may include, but are not limited to, seed fibers such as cotton and kapok; leaf fibers such as sisal and agave; bast fibers or skin fibers such as flax, jute, kenaf, hemp, ramie, rattan, soybean fibers, vine fibers, and banana fibers; fruit fibers such as coconut fibers; stalk fibers such as straws of wheat, rice, barley, bamboo, grass, and tree wood; animal hair fibers such as sheep's wool, goat hair (cashmere, mohair), alpaca hair, horse hair; silk fibers; avian fibers such as feathers; Preferably, the natural fibers used in this invention should possess at least moderate strength and stiffness and good ductility. Fibers with larger diameters are also preferable as these offer greater fibers stiffness. Further, the lengths of the natural fibers 130 may vary from about 50 mm to 400 mm, preferably from about 150 mm to about 350 mm.

In an embodiment of the present invention, the natural fibers includes natural raw fibers such as jute, hemp, cocos, flax, sisal etc. In a more preferred embodiment of the present invention, jute fibers is used as natural fibers. The jute fibers inherits properties such as low density, low abrasive properties, high strength and therefore good dimensional stability.

In a preferred embodiment of the present invention, the fibers with second melting temperature may be synthetic thermoplastic fibers with higher melting temperature than the thermoplastic matrix, such as fibers of the group of polyesters, ABS, Poly styrene, nylon, PA, or the like.

A method in accordance with the present invention may include a number of steps for obtaining flakes of thermoplastic material to be recycled., However, the sequence of the method steps disclosed hereinafter is exemplary for the sake of understanding the invention for persons skilled in the art.

Generally, the collection of thermoplastic flakes to be mixed to form the thermoplastic matrix may be obtained in a ready to use configuration from various sources (for example third party vendors) providing the recycled thermoplastic flakes. However, in some embodiments of the present invention, the collection of the thermoplastic flakes is obtained from a collection of thermoplastic material to be recycled.

The collection of thermoplastic material generally includes low weight density and/or low bulk density thermoplastic material mixed along with high weight density and/or high bulk density thermoplastic materials. The collection of thermoplastic material received is sorted according to various factors such as type of material, color of material, or the like, and is then comminuted to form regrind including flakes and granules. Standard size reduction of plastics to regrind is typically performed by shredders and granulators. These machines have industrial blades that perform rotational cutting to chop down the plastic, which is passed through a screen and then taken away for the next stage in the process. In embodiments of the present invention, the shredder screen may have a hole diameter preferably ranging between 3mm and 25mm, or more preferably between 3mm and 15mm, and most preferably between 5mm and 10mm.

Thereafter regrind with higher weight density and/or higher bulk density is separated from regrind having lower weight density and/or lower bulk density; preferably by means of centrifugal process, or by a flotation technique such as separation in water, thereby separating the thermoplastic flakes having a density and/or bulk density lower than water from the flakes having a density and/or bulk density greater than water.

In a next step the regrind with lower weight density and/or lower bulk density is processed to separate flakes from granules, for example by wind shifting.

In the context of the present invention flakes are regrind originating from plastic foils, plastic bags, plastic gloves, and all types of plastic sheet or multilayer sheet material with density and/or bulk density lower than water. The size of these flakes is determined by passing a shredder screen with a hole diameter preferably ranging between 3mm and 25mm, or more preferably between 3mm and 15mm, and most preferably between 5mm and 10mm.

In a next step, fibers with second melting temperature are provided undergoing a webbing process, preferably a carding or needle punching process to form a homogeneously mixed web structure. Weaving or related textile manufacturing processes, or ultrasonic welding may be applied also.

The carding process may be performed, for example, on a Rando machine or Laroche machine, or any other machine, as already known in art. Alternatively, the webbing is performed using any known mechanism such as carding process, or the like. Carding is a mechanical process that disentangles and intermixes fibers to produce a continuous web suitable for subsequent processing. By using a carding process a web structure up to a very thin pre-determined thickness can be produced (up to 16g/m²).

Ultrasonic welding may have an advantage in the fact that the distance between fibers can be variably selected, such that flakes at both sides of the web-structure can contact each other, resulting in improved characteristics of the recycled plastic composite.

Once the web structure is formed, the method proceeds to a next step where the light weight thermoplastic matrix is uniformly spread, i.e. evenly distributed by uniformly spreading, on the web-structure After spreading the thermoplastic matrix, a second web structure may be positioned on the thermoplastic matrix, as such having the light weight thermoplastic matrix in between two webs. The latter two steps may be repeating a number of times resulting in layers of spread light weight thermoplastic matrix between web structures of fibers, resulting in very high volumes of thermoplastic matrix incorporated in the resulting plastic composite. Then, the structure is heated using known mechanisms such as a thermoforming process. The thermoforming process used, preferably, is a thermo-bonding process in which the web structure obtained from the previous step is heated by passing through heated calendar rollers. Alternatively the consolidation may be performed by other heating mechanisms that may sufficiently raise the temperature within the web-structure so as to enable bond the thermoplastic materials to each other and to the natural fibers. Such mechanism may include, one of but not limited to heat pressing, vacuum molding, steam heating, microwave heating, or the like, already known in the art. As explained earlier, consolidating may be done by single step thermoforming, or alternatively by a two-step thermoforming process.

The method may further comprise an optional step where two or more thermoplastic composite are manufactured. Thereafter, the two or more thermoplastic composites are connected together in a layered structure to form a multi-layered thermoplastic composite. The layering may be done by using any of the conventionally known techniques such as one of but not limited to pressing, vacuum forming, gluing, welding, or the like. Further, each layer of the multilayer thermoplastic composite may be formed of similar or different thermoplastic material as according to the desired application and properties of the thermoplastic composite to be manufactured.

In some embodiments of the present invention, the method further includes an optional step of treating one or more surface of the thermoplastic composite with a finishing material and I or post treatment processes to impart selected properties to the composite. For example, one or more surface of the thermoplastic composite may be treated with an antimicrobial agent, antifungal agent, or the like. Alternatively and I or additionally, the thermoplastic composite may be treated with finishing materials such as for example, wax, paint, or the like.

### INDUSTRIAL APPLICABILITY

The present disclosure relates to a thermoplastic composite sheets, mats, or boards formed of recycled plastic materials generally of light weight, and is usable for various utilities such as traffic management products such as advertising boards, parking plates, drive plates, other structural components formed of thermoplastic materials and requiring desired properties such as Impact strength, swell, heat resistance, heat retardancy, dimensional stability, wear resistance, etc. at least comparable with conventional plastic sheets, mats or boards. In addition, by spreading recycled thermoplastic matrix over thin webs of fibers, very high volumes of recycled thermoplastic matrix can be incorporated in the resulting plastic composite.

The thermoplastic composite may include about 10% to 50%, or 10% to about 30%, and preferably about 20% by weight of reinforcing fibers having an average length of between about 50 mm and about 400 mm, and preferably between about 150 mm and about 350 mm. The thermoplastic composite includes generally and about 50% to 90%, or 70% to about 90% and preferably about 80% by weight of flakes of thermoplastic materials, having an average size ranging between about 3 mm and about 25 mm where the weight percentages are based on the total weight of the thermoplastic composite .

The present disclosure further provides a method, for manufacturing thermoplastic composite by recycling light weight thermoplastic materials. The method is generally a simple, cost efficient, time-saving, method for forming a high quality thermoplastic composite using generally unutilized light weight plastic wastes such as plastic foils, plastic bags, gloves, or the like, and/or combinations thereof. Conventionally, using such light weight plastic materials required additional step of melting down and shaping into granulates or pellets, before being applicable to be used for manufacturing of thermoplastic composites. However by using the method 400 in accordance with the present invention, the recycling process may be considerably and significantly shortened.

### Example: manufacturing of a pallet:

85%weight of recycled LOPE flakes originating from foils and bags shredded with 8mm shredder screen hole diameter were mixed with 15%weight of a mixture of ABS, PS and PVC granules of about the same size.

About 300g/m² of the above mixture was evenly distributed on a carded web-structure of 70g/m² of recycled PET fibers. This process was 2 times repeated and a final web-structure was laid on top, ending up in a sandwich structure of 4 carded webs with the mixture of flakes and granules evenly distributed in between. As such, the total weight of the structure is about 1180g/m².

This structure was thermoformed under pressure to an intermediate composite material of 1em thickness. The intermediate is a flexible mat and can be rolled up to a bale of for example about 200kg.

3 pieces of these flexible mats were laid on each other and presses at 200°C to a total thickness of 9mm, thereby forming a pallet.

## Claims

1. A method of manufacturing a recycled plastic composite, the method comprising the steps of:
i) Providing flakes of thermoplastic materials to be recycled;
ii) Mixing the thermoplastic flakes, thereby forming a thermoplastic matrix having a first melting temperature.
iii) Providing or forming a web-structure of a predetermined thickness from fibers having a second melting temperature higher than the first melting temperature iv) evenly distributing the thermoplastic matrix of thermoplastic flakes over the web-structure,
v) Optionally forming or providing a second web-structure and placing it over the thermoplastic matrix,
vi) Optionally repeating step iv and v, and
vii) heating the web-structure(s) using a thermoforming process;
wherein said thermoplastic flakes are obtained by a method comprising the steps of:
a) Providing one or more thermoplastic materials to be recycled;
b) Comminuting the one or more thermoplastic materials into regrind;
c) separating the thermoplastic material flakes from the regrind.

2. The method of claim 1, wherein the thermoforming is a two-step thermoforming process.

3. The method of claim 2, wherein the plurality of plastic composites may be connected in a layered structure using a process selected but not limited to one of pressing, vacuum forming, gluing, or welding.

4. A method of claim 1, wherein the thermoplastic flakes originate from materials of one or more of the group comprising plastic foils, plastic bags, or any plastic sheet or multilayer sheet material having a density and/or bulk density lower than water.

5. The method of claim 1, wherein the fibers having a second melting temperature includes fibers of one or more materials from the group comprising glass fibers, polyester, ABS, Poly styrene, nylon, PA and/or combinations thereof.

6. The method of claim 1, wherein the fibers having a second melting temperature are natural fibers or metal fibers.

7. The method of claim 1, wherein heating process comprises one of steam heating, steam injection heating, microwave heating, or vacuum heating.

8. The method of claim 1, wherein the size of the flakes ranges between 3mm and 25mm.

9. The method of claim 1, wherein the fibers with second melting temperature and thermoplastic matrix are present in a ratio of less than 50:50 by weight.

10. The method of claim 1, wherein the length of natural fibers ranges between 50 mm to about 400 mm, and preferably between 100 mm and 300mm.

## Patentansprüche

1. Verfahren zur Herstellung eines Verbundstoffs aus Recyclingkunststoff, wobei das Verfahren die folgenden Schritte umfasst:
i) Bereitstellen von Flocken aus zu recycelnden Thermoplastmaterialien,
ii) Mischen der Thermoplastflocken, wodurch eine Thermoplastmatrix mit einer ersten Schmelztemperatur gebildet wird,
iii) Bereitstellen oder Bilden einer Bahnstruktur mit festgelegter Dicke aus Fasern, die eine zweite Schmelztemperatur aufweisen, die höher als die erste Schmelztemperatur ist,
iv) gleichmäßiges Verteilen der Thermoplastmatrix aus Thermoplastflocken über die Bahnstruktur,
v) optional Bilden oder Bereitstellen einer zweiten Bahnstruktur und Platzieren derselben über der Thermoplastmatrix,
vi) optional Wiederholen von Schritt iv und v, und
vii) Erwärmen der Bahnstruktur(en) mit Hilfe eines Thermoformprozesses,
wobei die Thermoplastflocken durch ein Verfahren gewonnen werden, das die folgenden Schritte umfasst:
a) Bereitstellen eines oder mehrerer zu recycelnder Thermoplastmaterialien,
b) Zerkleinern des einen oder der mehrern Thermoplastmaterialien zu einem Regenerat,
c) Abscheiden der Thermoplastmaterialflocken von dem Regenerat.

2. Verfahren nach Anspruch 1, wobei das Thermoformen ein Thermoformprozess in zwei Schritten ist.

3. Verfahren nach Anspruch 2, wobei die mehreren Kunststoffverbundstoffe mit Hilfe eines Prozesses, der insbesondere aus Pressen, Vakuumformen, Kleben, oder Schweißen ausgewählt wird, zu einer Schichtstruktur verbunden werden können.

4. Verfahren nach Anspruch 1, wobei die Thermoplastflocken von Materialien von einem oder mehreren der Gruppe stammen, die Kunststofffolien, Kunststoffbeutel, oder einem beliebigen Kunststoffbahn- oder mehrschichtigen Bahnmaterial mit einer Dichte und/oder Schüttdichte umfasst, die niedriger als die von Wasser ist.

5. Verfahren nach Anspruch 1, wobei die Fasern, die eine zweite Schmelztemperatur aufweisen, Fasern von einem oder mehreren Materialien der Gruppe beinhalten, die Glasfasern, Polyester, ABS, Polystyrol, Nylin, PA und/oder Kombinationen daraus umfasst.

6. Verfahren nach Anspruch 1, wobei die Fasern, die eine zweite Schmelztemperatur aufweisen, Naturfasern oder Metallfasern sind.

7. Verfahren nach Anspruch 1, wobei der Erwärmungsprozess eines von Dampferwärmen, Dampfinjektionserwärmen, Mikrowellenerwärmen, oder Vakuumerwärmen umfasst:

8. Verfahren nach Anspruch 1, wobei die Größe der Flocken im Bereich zwischen 3 mm und 25 mm liegt.

9. Verfahren nach Anspruch 1, wobei die Fasern mit der zweiten Schmelztemperatur und die Thermoplastmatrix in einem Verhältnis kleiner als 50:50 Gewichtsprozent vorhanden sind.

10. Verfahren nach Anspruch 1, wobei die Länge der Naturfasern im Bereich zwischen 50 mm und etwa 400 mm liegt und vorzugsweise zwischen 100 mm und 300 mm.

## Revendications

1. Procédé de fabrication d'un composite en plastique recyclé, le procédé comprenant les étapes de :
i) Fourniture de flocons de matériaux thermoplastiques à recycler ;
ii) Mélange des flocons thermoplastiques, pour ainsi former une matrice thermoplastique ayant une première température de fusion.
iii) Fourniture ou formation d'une structure de bande d'une épaisseur prédéterminée à partir de fibres ayant une seconde température de fusion supérieure à la première température de fusion,
iv) répartition uniforme de la matrice thermoplastique de flocons thermoplastiques sur la structure de bande,
v) Facultativement formation ou fourniture d'une seconde structure de bande et placement de celle-ci sur la matrice thermoplastique,
vi) Facultativement répétition de l'étape iv et v, et
vii) chauffage de la (des) structure(s) de bande en utilisant un procédé de thermoformage ;
dans lequel lesdits flocons thermoplastiques sont obtenus par un procédé comprenant les étapes de :
a) Fourniture d'un ou plusieurs matériaux thermoplastiques à recycler ;
b) Fragmentation des un ou plusieurs matériaux thermoplastiques en matière rebroyée ;
c) séparation des flocons de matériaux thermoplastiques de la matière rebroyée.

2. Procédé selon la revendication 1, dans lequel le thermoformage est un procédé de thermoformage en deux étapes.

3. Procédé selon la revendication 2, dans lequel la pluralité de composites en plastique peuvent être reliés en une structure stratifiée en utilisant un procédé choisi, sans que ce soit limitatif, parmi l'un du pressage, du formage sous vide, du collage ou du soudage.

4. Procédé selon la revendication 1, dans lequel les flocons thermoplastiques proviennent de matériaux d'un ou plusieurs du groupe comprenant les films en plastique, les sacs en plastique, ou tout matériau en feuille de plastique ou en feuille multicouche ayant une masse volumique et/ou une masse volumique apparente inférieure à l'eau.

5. Procédé selon la revendication 1, dans lequel les fibres ayant une seconde température de fusion incluent les fibres d'un ou plusieurs matériaux du groupe comprenant les fibres de verre, le polyester, l'ABS, le polystyrène, le nylon, le PA et/ou les combinaisons de ceux-ci.

6. Procédé selon la revendication 1, dans lequel les fibres ayant une seconde température de fusion sont des fibres naturelles ou des fibres métalliques.

7. Procédé selon la revendication 1, dans lequel le procédé de chauffage comprend l'un parmi le chauffage à la vapeur, le chauffage par injection de vapeur, le chauffage par micro-ondes, ou le chauffage sous vide.

8. Procédé selon la revendication 1, dans lequel la taille des flocons se situe entre 3 mm et 25 mm.

9. Procédé selon la revendication 1, dans lequel les fibres ayant la seconde température de fusion et la matrice thermoplastique sont présentes en un rapport inférieur à 50:50 en poids.

10. Procédé selon la revendication 1, dans lequel la longueur des fibres naturelles se situe entre 50 mm à environ 400 mm, et de préférence entre 100 mm et 300 mm.
